Europäisches Patentamt

European Patent Office

Office européen des brevets

(19)

(11) Numéro de publication: **0 401 448**
**A1**

(12) **DEMANDE DE BREVET EUROPEEN**

(21) Numéro de dépôt: **89401587.4**

(22) Date de dépôt: **08.06.89**

(51) Int. Cl.⁵: **G05F 1/62, H02M 7/12**

(43) Date de publication de la demande:
**12.12.90 Bulletin 90/50**

(84) Etats contractants désignés:
**DE ES GB IT**

(71) Demandeur: **SOCIETE TECHNIQUE D'INGENIERIE ET DE COOPERATION**
**40, Boulevard Suchet**
**F-75016 Paris(FR)**

(72) Inventeur: **Chemin, Henri L.**
**40, Boulevard Suchet**
**F-75016 Paris(FR)**

(74) Mandataire: **Serin, Jean-Pierre et al**
**Cabinet PIERRE LOYER 77, rue Boissière**
**F-75116 Paris(FR)**

(54) **Alimentation stabilisée à très haut rendement par régulation série à découpage.**

(57) L'alimentation stabilisée comporte un transformateur secteur (5) suivi par un redresseur monophasé ou polyphasé (6) et par un intégrateur. La sortie positive du pont est connectée à l'entrée négative d'un régulateur de tension différentielle (8). La sortie positive du régulateur est connectée directement à la charge (13). La sortie négative du pont est connectée à la masse. La tension différentielle est asservie par une boucle de contre-réaction qui neutralise les variations amont et aval ainsi que les ondulations résiduelles. Cette tension différentielle (Udiff) est obtenue par une source indépendante à découpage à très haut rendement (UI). Elle fournit un apport de puissance supplémentaire qui s'ajoute à la puissance de sortie du transformateur.

*Fig. 4*

EXEMPLE DE RÉGULATEUR A DÉCOUPAGE SERIE MONOPHASE PLACE EN TETE

$$U_I - \varepsilon < U_I < U_I + \varepsilon$$

EP 0 401 448 A1

**Alimentation stabilisée à très haut rendement par régulation série à découpage.**

L'invention concerne un procédé et un dispositif de régulation à haut rendement..

Dans le cas d'une alimentation de tension stabilisée, par exemple, elle s'applique à l'obtention et à la régulation de la tension de sortie.

Lorsqu'on désire garantir des caractéristiques constantes sur un équipement électronique complexe représenté par une charge variable, il est impératif de maintenir la tension d'alimentation parfaitement constante, continue et indépendante des variations de la source et du courant d'utilisation. Ceci est d'autant plus difficile à obtenir que les variations de la source et la puissance d'utilisation sont importantes.

Les régulateurs mécaniques qui procèdent par déplacements de curseurs, les régulateurs férromagnétiques qui utilisent des amplificateurs magnétiques sont progressivement remplacés par des dispositifs électroniques. Ces derniers ont des caractéristiques notablement plus élevées au plan fiabilité et performances.

Leurs limitations sont de deux ordres :

Premièrement, d'ordre économique : le coût du watt régulé ;

Deuxièmement, d'ordre dynamique : le niveau de puissance maximal possible.

Le système faisant l'objet de l'invention contribue notablement à repousser ces limites tout en améliorant sensiblement les rendements.

L'invention est décrite ci-après avec référence aux dessins annexés sur lesquels on peut voir :

Figure 1 : un schéma électrique simplifié d'une régulation série par transistor ballast;

Figure 2 : un schéma électrique simplifié d'une régulation par apport différentiel suivant l'invention;

Figure 3 : une courbe d'évolution du gain du système suivant l'invention en fonction de l'efficacité de régulation;

Figure 4 : un exemple de réalisation de régulateur série à découpage monophasé placé en tête;

Figure 5 : le détail du régulateur à découpage série;

Figure 6 : un exemple de réalisation de régulateur série à découpage monophasé placé en pied;

Figure 7 : un exemple de réalisation de régulateurs série à découpage multisources indépendantes, (généralisation).

Il existe deux types d'alimentations stabilisées : les alimentations dites à régulateur série ballast et les alimentations à découpage secteur.

L'analyse comparative ci-après précise l'état de la technique.

Les systèmes de régulation à transistor ballast sont très vite limités en puissance du fait de la dissipation maximale admissible sur l'élément semiconducteur qui absorbe les tensions différentielles. Ils possèdant un rendement faible qui varie avec la tension primaire secteur (inférieur à 60 %). Cependant, au plan sécurité de fonctionnement, ils ont plusieurs avantages :

- les semiconducteurs sont utilisés sous une basse tension,

- il y a isolement galvanique entre le système de régulation et la source secteur, ce qui protège les éléments actifs.

Les éléments les plus faibles sont par ordre décroissants :

- les circuits passifs : le transformateur, les diodes de redressement,

- les circuits actifs à faible dissipation : les circuits comparateurs, amplificateurs opérationnels,

- le circuit actif à forte dissipation : le transistor ballast.

Ce dernier est de très loin la principale cause de défaut.

Les d'un court-circuit du transistor, la tension redressée est transmise à la charge. Cette tension, étant plus importante que la tension de sortie nominale, peut être destructrice pour le circuit d'utilisation. Lors d'une coupure du transistor, la charge ne reçoit plus aucune tension.

Les système d'alimentation à découpage secteur ont des caractéristiques très supérieures au système précédent au plan du rendement. Ils sont cependant limités, pour une technologie donnée, au plan de la puissance de sortie disponible : la puissance maximale transférée est en effet fonction de la puissance collecteur maximale des transistors de découpage. Ils sont limités au plan tension amont, puisque la tension secteur redressée est directement appliquée au transistor de découpage. La tension maximale d'entrée est en effet fonction de la tension maximale admissible sur les transistors de découpage.

Les systèmes à découpage secteur direct ont d'autres inconvénients :

- absence d'isolement galvanique des semiconducteurs de découpage par rapport à la source secteur,

- lors d'une rupture au niveau des transistors de découpage ou de l'électronique associée la tension de sortie de l'alimentation est nulle.

Il n'y a donc pas continuité de la fonction réalisée par la charge.

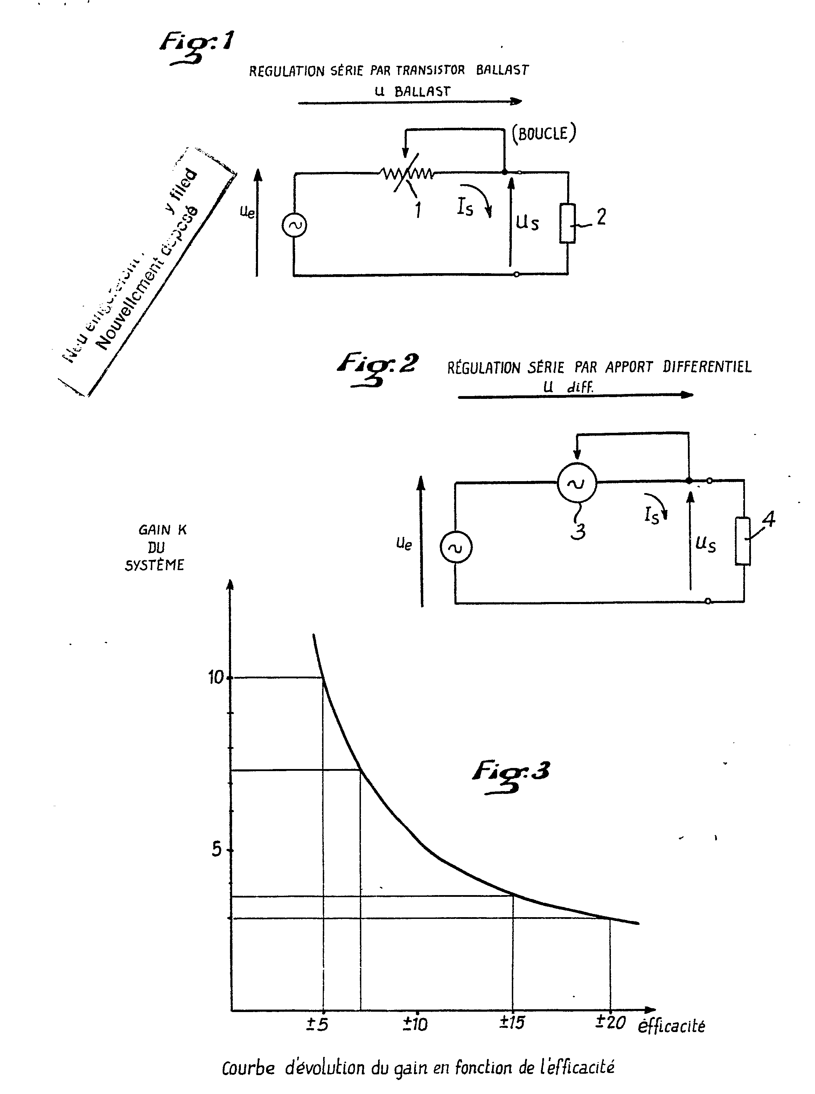

Le principe de l'apport différentiel à haut rendement peut être explicité par deux exemples simples figures 1 et 2.

Dans les systèmes de régulation série ballast, la tension de sortie (Us) est obtenue par différence entre la tension d'entrée variable (Ue) et la tension développée aux bornes du ballast (U ballast). La totalité de la puissance de sortie est contrôlée par l'élément de régulation. Pour une tension d'entrée maximale Uemax, la tension aux bornes du transistor ballast est maximale et par conséquent le rendement est minimal : par exemple pour Ue = + 20 %, le rendement est très inférieur à 60 %.

Sur la figure 1, la variable (Ue) représente la tension d'entrée du système de régulation. C'est par exemple la tension redressée filtrée fournie par un transformateur secteur, des redresseurs et une cellule de filtrage associée.

Le transistor ballast 1 se comporte comme une résistance variable ( et a été représentée comme telle) dont la valeur est asservie pour maintenir la tension aux bornes de la charge 2 constante quelque soient les valeurs prises par les variables (Ue) et (Is).

Dans le système objet du brevet la tension de sortie (Us) est obtenue par sommation entre la tension d'entrée (Ue) et la tension différentielle produite par l'élément générateur placé en série 3 (Udiff), (Figure 2). Seule la puissance différentielle doit être contrôlée (Udiff x Is). Par exemple, pour Ue ± 20 %, le générateur Udiff fournit seulement 0, 4 Ue x Is, et ce avec un rendement excellent supérieur à 80 %. Plus généralement pour une plage de régulation Ue ± ε le générateur fournit une puissance de 2ε x Ue Is.

La majeur partie de la puissance est fournie directement par le redresseur avec un rendement supérieur à 90 %. Le générateur série (Udiff) est obtenu par une source à découpage donc avec un rendement supérieur à 80 %. Il est clair que la puissance de sortie globale est très supérieure à la puissance contrôlée par la source différentielle. Ainsi, pour un coût de revient identique, le coefficient multiplicateur K (rapport entre la puissance de sortie et la puissance nominale différentielle) peut atteindre une valeur supérieure à 7. Il est à noter que pour une régulation de ± 20 % il est sensiblement de 3, tandis que pour une régulation de ± 7 % il peut atteindre une valeur supérieure à 7. (Voir la courbe Figure 3).

Les avantages de la régulation par apport de puissance différentielle asservie à très haut rendement sont les suivants :

Le système faisant l'objet de l'invention présente une grande partie des avantages des systèmes de régulation connus, sans en présenter les inconvénients.

TABLEAU I

| Analyse comparative des différents types de régulation. | | | |
|---|---|---|---|
| | TR Ballast | Découpage secteur | Régulation par apport de puissance différentielle |
| Puissance régulée | Ps ≪ 500 w | 500 < Ps <3kw | Ps ≫ 3kw |
| Rendement | 50 à 60 % | 80 % | ≫ 90 % |
| Tension de sortie régulée | Vs < 100 v | Vs > 100 v | Flottante |
| Isolement galvanique | oui | non | oui |
| Tension de sortie en cas de rupture | O ou destructrice (> Vs) | O | Maintenue légèrement < Vs |
| Tension d'entrée du régulateur | BT | V secteur | quelconque |
| Puissance volumique | Faible | Moyenne | Forte |
| Courant secteur | sinusoïdal | impulsionnel | sinusoïdal |

Il conduit à une amélioration considérable du rendement des alimentations stabilisées et à technologie égale permet de décupler la puissance de sortie disponible, donc, minimiser le coût du watt régulé.

Au plan fiabilité, les éléments actifs sont utilisés dans les meilleures conditions :

- Rendement élevé, dont échauffement faible.

- Isolation galvanique des semiconducteurs par rapport au section (protection contre les décharges atmosphériques).

- Continuité d'alimentation vis-à-vis de l'utilisation, même dans le cas d'une rupture des éléments régulateurs.

Cette dernière caractéristique est un avantage majeur car la fonction réalisée par la charge est maintenue. La tension de sortie est alors légèrement inférieure à la tension d'alimentation nominale, ce qui ne présente donc aucun risque de rupture pour l'utilisation.

Description de systèmes mettant en oeuvre l'invention.

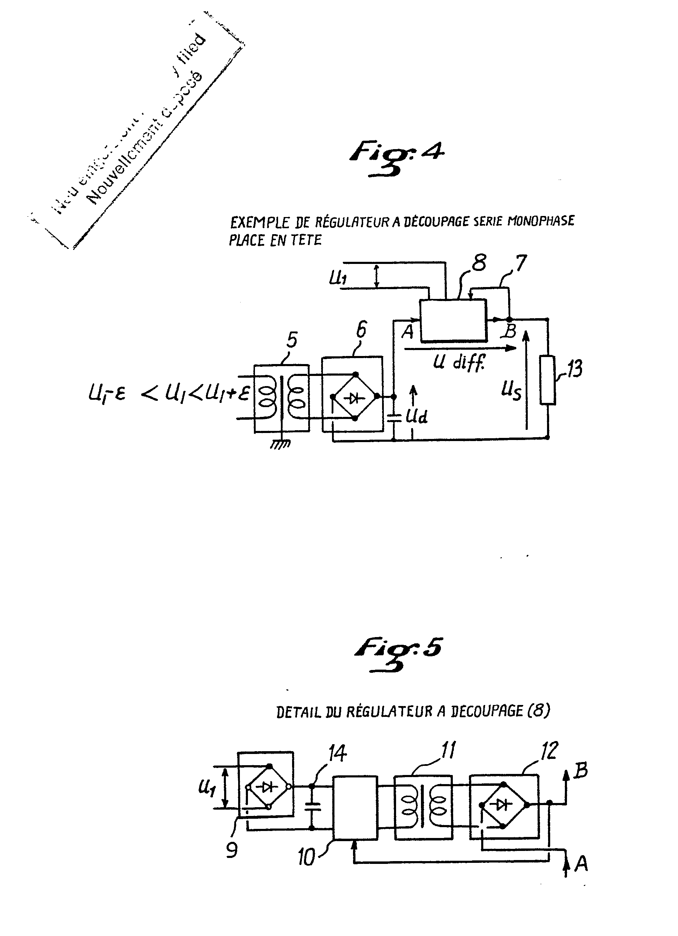

Dans la forme de réalisation suivant la figure 4, le transformateur monophasé ou polyphasé fournit une tension alternative au pont de redressement 6. La tension redressée filtrée (Ud) sera d'autant plus stable que le nombre de phase sera grand. La tension différentielle (Udiff) est nulle lorsque U1 est maximale. Cette tension sera maximale lorsque U1 sera minimale.

Le régulateur à découpage 8 est asservi par la boucle de réaction 7. Il neutralise à la fois les variations lentes et l'ondulation résiduelle du redressement. Le régulateur série à découpage fournit donc une tension variable qui est le complément à (Us) de (Ud). Il n'agit que sur la différentielle.

Dans le schéma de la figure 4, le régulateur à découpage est inserré dans la sortie entre les points A et B. Il peut être alimenté par une source indépendante, ou par un enroulement secondaire du transformateur. Il fournit une tension (Udiff) dont la valeur moyenne est fonction de (Ud) donc de la tension secteur (U1). La tension (Udiff) compense aussi les résidus de filtrage de manière à maintenir la tension aux bornes de la charge 13 parfaitement continue et constante.

On voit clairement sur cette figure qu'en cas de rupture d'un élément de 8, il y a continuité entre A et B.

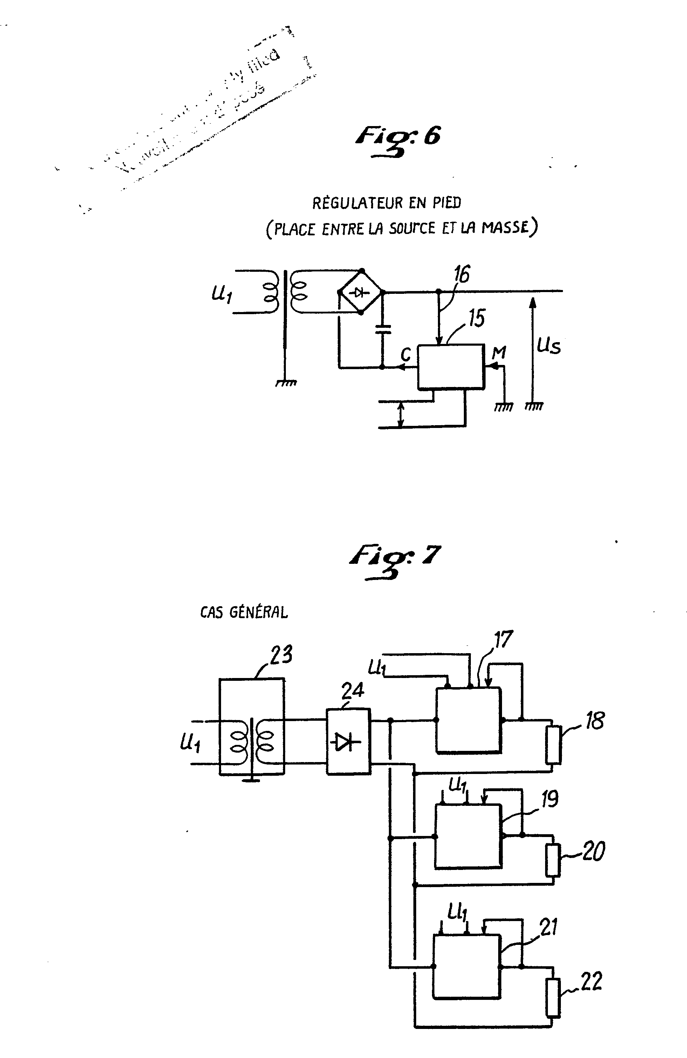

La figure 5 montre le détail du régulateur à découpage 8. Celui-ci comprend un pont de redressement secteur 9 suivi par un intégrateur 14, les transistors de découpage 10, suivis par les transformateur HF 11 et par un pont de redressement 12.

Le schéma de la figure 6 montre le régulateur série 15 placé entre C et M en pied. Il est asservi sur la variable (Us) par le circuit de contre-réaction 16.

La forme de réalisation suivant la figure 7, représente une généralisation de l'invention. A partir d'un même transformateur et redresseur monophasé ou polyphasé 23 et 24, plusieurs charges indépendantes 18, 20, 22 sont alimentées en tensions régulées par les régulateurs à découpage 17, 19, 21.

Ces dernières peuvent être soit identiques, soit complètement différentes.

La synthèse des principaux avantages d'une réalisation suivant l'invention montre :

- il y a séparation galvanique entre les transistors de découpage et la source secteur ce qui est un avantage considérable au plan de la fiabilité.

- l'ensemble peut être protégé avec un surcroît modique, grâce à un transformateur à écran électrostatique (transformateur d'isolement ), et grâce à des protections foudre primaires.

- les tensions qui doivent être régulées peuvent avoir une valeur absolue aussi élévée qu'on le désire : le principe est applicable à la régulation des hautes tensions et des très hautes tensions.

- le rendement est amélioré de plus de 10 %, ce qui conduit à une dissipation thermique notablement plus faible.

- le courant primaire de l'alimentation est pratiquement sinusoïdal, ce qui permet par conséquent une annulation du courant dans le conducteur du neutre dans le cas d'une disposition triphasée.

- à technologie égale, le principe permet une augmentation considérable des puissances continues régulées disponibles.

- le coût du watt régulé est diminué dans un rapport supérieur à 4 dans l'état de la technique actuelle.


## Revendications

1. - Procédé de régulation à haut rendement, caractérisé en ce que la variable de sortie à réguler est décomposée en deux variables, une première dite source qui est transférée intégralement en sortie après addition algébrique avec une deuxième dite différentielle, asservie à la variable de sortie, et qui est obtenue par génération propre à l'intérieur du dispositif.

2. - Dispositif de régulation pour mettre en oeuvre le procédé suivant la revendication 1, pour la régulation de tension, par apport différentiel à haut rendement, du type comprenant un générateur continu formé par un transformateur secteur, associé à un générateur de tension différentielle Udiff variable, caractérisé en ce que le générateur continu est placé en série avec le générateur de tension différentielle.

3. - Dispositif suivant la revendication 2, caractérisé en ce que le générateur de tension différentielle est asservi à la tension d'utilisation.

4. - Dispositif suivant la revendication 3, caractérisé en ce que le générateur de tension différentielle est flottant et placé en tête du redressement (Figure 4).

5. - Dispositif suivant la revendication 3, caractérisé en ce que le générateur de tension différentielle est référencé sur la masse et placé en pied de redressement (Figure 6).

6. - Dispositif suivant l'une des revendications 4 et 5, caractérisé en ce que le générateur de tension différentielle est alimenté par une source indépendante.

7. - Dispositif suivant les revendications 4 et 5, caractérisé en ce que le générateur de tension différentielle est alimenté par un enroulement secondaire du transformateur.

8. - Dispositif suivant l'une des revendications 2 à 7, caractérisé en ce que le transformateur est polyphasé et associé à des redresseurs polyphasés.

9. - Dispositif suivant la revendication 8, caractérisé en ce que le transformateur et les redresseurs sont associés à plusieurs générateurs de tension différentielle asservis (figure 7).

10. - Dispositif suivant la revendication 9, caractérisé en ce que les générateurs fournissent des tensions identiques.

11. - Dispositif suivant la revendication 9, caractérisé en ce que les générateurs fournissent des tensions différentes.

12. - Dispositif suivant l'une quelconque des revendicatiorns 2 à 11, caractérisé en ce que le transformateur est un transformateur d'isolement.

**Fig:1**

REGULATION SÉRIE PAR TRANSISTOR BALLAST

U BALLAST

(BOUCLE)

$u_e$  $I_s$  $u_s$  1  2

**Fig:2** RÉGULATION SÉRIE PAR APPORT DIFFERENTIEL

U diff.

$u_e$  $I_s$  $u_s$  3  4

GAIN K
DU
SYSTÈME

**Fig:3**

10

5

±5  ±10  ±15  ±20  efficacité

Courbe d'évolution du gain en fonction de l'efficacité

## Fig: 4

EXEMPLE DE RÉGULATEUR A DÉCOUPAGE SERIE MONOPHASE
PLACE EN TETE

$$U_1 - \varepsilon < U_1 < U_1 + \varepsilon$$

## Fig: 5

DETAIL DU RÉGULATEUR A DECOUPAGE (8)

## Fig. 6

RÉGULATEUR EN PIED
(PLACE ENTRE LA SOURCE ET LA MASSE)

## Fig. 7

CAS GÉNÉRAL

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-921888 (INTERNATIONAL STANDARD ELECTRIC CORPORATION) <br> * page 1, ligne 26 - page 2, ligne 43; figure 1 * <br> --- | 1-4, 7, 8, 12 | G05F1/62 <br> H02M7/12 |
| X | PATENT ABSTRACTS OF JAPAN <br> vol. 9, no. 329 (P-416)(2052) 24 décembre 1985, <br> & JP-A-60 153524 (EISEI SASAKI) 13 août 1985, <br> * le document en entier * <br> --- | 1-3, 6 | |
| A | FR-A-1370324 (ACCUMULATORENFABRIK SONNENSCHEIN) <br> * page 1, colonne de droite, alinéa 2; figure 2 * <br> --- | 1, 2 | |
| E | FR-A-2624281 (SOCIETE TECHNIQUE D'INGENIERIE ET DE COOPERATION) <br> * le document en entier * <br> ----- | 1-12 | |
| | | | **DOMAINES TECHNIQUES RECHERCHES (Int. Cl.5 )** <br><br> G05F <br> H02M |

Le présent rapport a été établi pour toutes les revendications

| Lieu de la recherche | Date d'achèvement de la recherche | Examinateur |
|---|---|---|
| LA HAYE | 30 JANVIER 1990 | MOUEZA A.J.L. |